# EUROPEAN PATENT APPLICATION

(11) **EP 4 657 545 A1**
(43) Date of publication of application: **03.12.2025**
(21) Application number: 24891733.8
(22) Date of filing: 11.11.2024
(51) Int. Cl.: H01M 4/133, H01M 4/587, H01M 4/1393, H01M 10/052, H01M 4/02

(54) **ANODE AND MANUFACTURING METHOD THEREFOR**

(30) Priority: 15.11.2023 KR 20230158093
(71) Applicant: LG Energy Solution, Ltd., Seoul 07335 (KR)
(72) Inventor: LEE, Chang Ju, Daejeon 34122 (KR); PARK, Sung Min, Daejeon 34122 (KR); WOO, Sang Wook, Daejeon 34122 (KR); LEE, Yong Ju, Daejeon 34122 (KR)
(74) Representative: Plasseraud IP
(86) International application number: PCT/KR2024/017721
(87) International publication number: WO 2025/105787

(57) **Abstract**

The present invention relates to a negative electrode for a lithium secondary battery, and a manufacturing method therefor. The negative electrode for a lithium secondary battery comprises transition metal particles including iron and/or nickel in a carbon-based negative electrode active material, wherein the concentration ratio of iron to nickel is controlled to satisfy a predetermined range. Therefore, the negative electrode has excellent lifespan characteristics in high-temperature conditions and low electrical resistance in high-rate conditions. In addition, a lithium secondary battery comprising same can have excellent high-temperature lifespan characteristics and high-rate charge/discharge performance.

## Description

### [Technical Field]

The present disclosure relates to a negative electrode for a secondary battery and a manufacturing method thereof.

This application is based on and claims priority from Korean Patent Application No. 10-2023-0158093 filed on November 15, 2023 with the Korean Intellectual Property Office, the disclosure of which is incorporated herein in its entirety by reference.

### [Background]

Secondary batteries are widely used not only in small-sized devices such as portable electronic devices, but also in medium- and large-sized devices such as battery packs for hybrid vehicles (HVs) and electric vehicles (EVs) or power storage devices. In addition, as interest in environmental issues has recently grown, research is being conducted on electric vehicles and hybrid electric vehicles (HEVs) that may replace fossil fuel vehicles such as gasoline vehicles and diesel vehicles, which are one of the main causes of air pollution, and research on high-capacity secondary batteries that drive the EVs and HEVs is also being actively conducted.

Secondary batteries are rechargeable batteries, and may include conventional Ni/Cd batteries, Ni/MH batteries, and the latest lithium-ion batteries. Among these secondary batteries, lithium-ion batteries have little memory effect compared to Ni/Cd batteries and Ni/MH batteries. Thus, lithium-ion batteries may be freely charged and discharged, have a low self-discharge rate, and have high energy density. In addition, lithium-ion batteries may be manufactured in small sizes and lightweight, resulting in high usability as a power source for mobile devices.

### [Related Art Document]

### [Patent Document]

Korean Patent Application Publication No.10-2017-0011566.

### [Summary]

### [Technical Problem]

Accordingly, an object of the present disclosure is to provide a negative electrode for secondary batteries having excellent life characteristics under high-temperature conditions and excellent electrical performance under high-rate conditions, and a method for manufacturing the same.

### [Technical Solution]

To solve the problems described above,
the present disclosure provides a negative electrode for a secondary battery, including a negative electrode current collector, and a negative electrode active layer provided on at least one surface of the negative electrode current collector and including a carbon-based negative electrode active material. The carbon-based negative electrode active material includes transition metal particles having magnetism, and the transition metal particles includes iron and nickel. The carbon-based negative electrode active material includes the transition metal particles at a concentration of 1,200 ppm or less, and the concentration ratio of iron and nickel (Fe/Ni) included in the carbon-based negative electrode active material is 2.5 to 13.0.

A concentration of iron included in the carbon-based negative electrode active material may be 0.1 ppm to 1,000 ppm.

A concentration of nickel included in the carbon-based negative electrode active material may be 0.01 ppm to 500 ppm.

In addition, the carbon-based negative electrode active material may include transition metal particles at a concentration of 0.01 ppm to 1,100 ppm.

Further, the transition metal particles having magnetism may include 50% or more of iron based on the total weight.

In addition, the transition metal particles may further include at least one of cobalt, chromium, zinc, magnesium, manganese, and copper.

In addition, the carbon-based negative electrode active material may be artificial graphite in a form of secondary particles assembled from primary particles.

Further, according to one embodiment, the present disclosure provides a method of manufacturing a negative electrode for a secondary battery, including: applying a negative electrode slurry including a carbon-based negative electrode active material to at least one surface of a negative electrode current collector, followed by drying to form a negative electrode active layer. The carbon-based negative electrode active material includes transition metal particles, and the transition metal particles having magnetism includes iron and nickel. The carbon-based negative electrode active material includes the transition metal particles at a concentration of 1,200 ppm or less, and the concentration ratio of iron and nickel (Fe/Ni) included in the carbon-based negative electrode active material is 2.5 to 13.0.

In the method of manufacturing the negative electrode, the carbon-based negative electrode active material is prepared by (S1) graphitizing a carbon raw material; (S2) carbonizing the carbon raw material graphitized in (S1); and (S3) adjusting a concentration of transition metal particles having magnetism present in the carbon raw material by applying a magnetic field at least once before and after (S2).

In the method of manufacturing the negative electrode, in (S3), the magnetic field is applied with a strength of 1,000 G to 40,000 G for 1 second to 600 seconds.

Further, in the method of manufacturing the negative electrode, (S3) is performed before or after (S2).

Further, in the method of manufacturing the negative electrode, a concentration of iron may be 0.1 ppm to 1,000 ppm.

In the method of manufacturing the negative electrode, a concentration of nickel may be 0.01 ppm to 500 ppm.

In addition, in the method of manufacturing the negative electrode, the transition metal particles may further include at least one of cobalt, chromium, zinc, magnesium, manganese, and copper.

### [Advantageous Effects]

The negative electrode for a secondary battery according to the present disclosure has advantages of excellent life characteristics under high-temperature conditions, and low electrical resistance under high-rate conditions. Accordingly, a lithium secondary battery including the negative electrode may have excellent high-temperature life characteristics, and high-rate charge/discharge performance.

### [Detailed Description]

The present disclosure may be modified in various ways and include various embodiments, and embodiments will be described in detail in the detailed description.

However, this is not intended to limit the present disclosure to specific embodiments, but should be understood to include all modifications, equivalents, or substitutes included in the technical scope of the present disclosure.

As used herein, it should be understood that the terms "comprise," "include," and "have" are intended to specify the presence of a feature, number, step, operation, component, part, or combination thereof, but do not exclude in advance the possibility of the presence or addition of one or more other features, numbers, steps, operations, components, parts, or combinations thereof.

In addition, as used herein, "including as a main component" may mean including 50 wt.% or more (or 50 vol.% or more), 60 wt.% or more (or 60 vol.% or more), 70 wt.% or more (or 70 vol.% or more), 80 wt.% or more (or 80 vol.% or more), 90 wt.% or more (or 90 vol.% or more), or 95 wt.% or more (or 95 vol.% or more) of a defined component based on the total weight (or total volume). For example, "including graphite as a main component as a negative electrode active material" may mean including 50 wt.% or more, 60 wt.% or more, 70 wt.% or more, 80 wt.% or more, 90 wt.% or more, or 95 wt.% or more of graphite based on the total weight of the negative electrode active material, and in some cases, it may mean that the negative electrode active material is entirely made of graphite, so that it includes 100 wt.% of graphite.

In addition, as used herein, the "average particle size (D₅₀)" refers to a particle size at a point where the volume percentage reaches 50% on the cumulative curve of the particle size distribution when the total volume is 100%, which means a particle size at the point where the volume becomes 50% when accumulated from a small particle size. The average particle size (D₅₀) may be measured using, for example, a laser diffraction method, and the laser diffraction method may generally measure particle sizes from the submicron range to several millimeters, and obtain results with high reproducibility and high resolution.

In addition, as used herein, "magnetism" or "magnetic" refers to a property of a material to be magnetized. The magnetism may be classified into diamagnetism, paramagnetism, and ferromagnetism, depending on the magnetization direction according to the direction of the magnetic field when an external magnetic field is applied or whether an external magnetic field is applied during magnetization.

As used herein, the words "about," "approximately," and "substantially" are intended to mean at or near the range of values or degrees to account for inherent manufacturing and material tolerances.

Lithium secondary batteries are rechargeable power generation devices with a stacked structure of positive electrode/separator/negative electrode. When charging a lithium secondary battery, a lithium desorption reaction occurs at the positive electrode in the battery in which lithium contained in the positive electrode active material is oxidized and released, and a lithium insertion reaction occurs at the negative electrode in which lithium is reduced and inserted into the negative electrode active material.

For the negative electrode, materials containing graphite-based carbon are widely used as the negative electrode active material. The average potential when a material including graphite-based carbon releases lithium, is approximately 0.2 V (based on Li/Li⁺), and the discharge potential shows a relatively flat pattern. Therefore, when graphite-based carbon is used as a negative electrode active material, the voltage of the secondary battery is relatively high and constant, which is an advantage.

The negative electrode active materials used for the negative electrode are either amorphous or crystalline carbon, and crystalline carbon is mainly used due to its high capacity. These crystalline carbon includes graphite-based carbon such as natural graphite and artificial graphite.

Meanwhile, the graphite-based carbon has different characteristics depending on the types. For example, natural graphite is inexpensive and exhibits excellent adhesion to a current collector, but is relatively inferior to artificial graphite in terms of high-rate charge/discharge performance or life characteristics. However, since the artificial graphite has a fewer surface defects or functional groups, when used by mixing propylene carbonate (PC) in an electrolyte for the purpose of improving low-temperature performance, the propylene carbonate may exfoliate and destroy each layer forming the interlayer structure of the graphite. This exfoliation of graphite deteriorates the life characteristics of the negative electrode under high-temperature conditions and increases resistance under high-rate conditions, which limits rapid charging performance.

In view of this, the present disclosure provides a technology of a negative electrode for a secondary battery that may improve life characteristics under high-temperature conditions and electrical performance under high-rate conditions.

Hereinafter, the present disclosure will be described in more detail.

### <Negative Electrode>

According to one embodiment, the present disclosure provides a negative electrode for a secondary battery, including: a negative electrode current collector; and a negative electrode active layer provided on at least one surface of the negative electrode current collector and including a carbon-based negative electrode active material. The carbon-based negative electrode active material includes transition metal particles, the transition metal particles includes iron and nickel. The carbon-based negative electrode active material includes total transition metal particles including iron and nickel at a concentration of 1,200 ppm or less, and the concentration ratio of iron and nickel (Fe/Ni) included in the carbon-based negative electrode active material is 2.5 to 13.0.

The negative electrode for a secondary battery according to the present disclosure may be a negative electrode applied to a lithium secondary battery. The negative electrode includes a negative electrode active layer on at least one surface of a negative electrode current collector. The negative electrode active layer implements electrical activity of the negative electrode, and includes a negative electrode active material that implements an electrochemical redox reaction during charging and discharging of the battery as a main component.

The negative electrode active material may include a carbon-based negative electrode active material as a main component.

For example, the carbon-based negative electrode active material may be included in an amount of 80 parts by weight to 99.8 parts by weight based on the total weight of the negative electrode active layer. For example, the carbon-based negative electrode active material may be included in an amount of 95 parts by weight or more, 98 parts by weight or more, 84 parts by weight to 99.8 parts by weight, 90 parts by weight to 99.8 parts by weight, 94 parts by weight to 99.8 parts by weight, 88 parts by weight to 96 parts by weight, or 92 parts by weight to 97.5 parts by weight based on the total weight of the negative electrode active layer.

In addition, the carbon-based negative electrode active material refers to a material containing carbon atoms as a main component, and such carbon-based negative electrode active material may include graphite. The graphite may include any one or more of natural graphite and artificial graphite. For example, the carbon-based negative electrode active material may include natural graphite or artificial graphite alone, and in some cases, may include a mixture of natural graphite and artificial graphite.

For example, the carbon-based negative electrode active material may include natural graphite and artificial graphite in a weight ratio of 5 to 50:50 to 95, 20 to 45:55 to 80, or 30 to 50:50 to 70. In this case, the carbon-based negative electrode active material may strengthen the adhesion between the negative electrode current collector and the negative electrode active layer, by including natural graphite and artificial graphite in the above-mentioned mixing ratio.

In addition, the carbon-based negative electrode active material may include artificial graphite alone. According to one embodiment of the present disclosure, when artificial graphite is included alone in the negative electrode active layer, the life of the negative electrode is significantly improved, which may be advantageous in conditions such as automobile batteries that must withstand frequent charging for a long time. In addition, batteries with artificial graphite is advantageous in rapid charging and have excellent output performance compared to batteries with natural graphite.

The carbon-based negative electrode active material may be secondary particles of graphite with a spherical shape formed by an assembly of a plurality of primary particles of graphite with a flake shape. Examples of the flake-shaped graphite include, in addition to natural graphite and artificial graphite, mesophase calcined carbon (bulk mesophase) using tar and pitch as raw materials, and graphitized coke (*e.g.,* raw coke, green coke, pitch coke, needle coke, and petroleum coke), and may be assembled, for example, using a multiple pieces of highly crystalline artificial graphite. In addition, one graphite assembly may be formed by an assembly of 2 to 100, or 3 to 20 pieces of flake-shaped graphite.

The average particle diameter (D₅₀) of the secondary particles may be in a range of 1 µm to 50 µm. For example, the average particle diameter (D₅₀) of the secondary particles may be in a range of 1 µm to 40 µm; 1 µm to 30 µm; 10 µm to 40 µm; 15 µm to 30 µm; 25 µm to 50 µm; 11 µm to 19 µm; 15 µm to 25 µm; 20 µm to 30 µm; 1 µm to 20 µm; 1 µm to 10 µm; 5 µm to 15 µm; 10 µm to 20 µm; 15 µm to 30 µm; 15 µm to 20 µm; 21 µm to 26 µm; 25 µm to 30 µm; 11 µm to 17 µm; 16 µm to 23 µm; 2 µm to 7 µm; 0.5 µm to 5 µm; or 1 µm to 3 µm. It may be advantageous to make the particle size smaller in order to maximize the degree of disorder in the direction of expansion of each particle, thereby suppressing expansion of the particles due to charging of lithium ions. However, when the particle size of carbon-based negative electrode active material is less than 1.0 µm, the number of particles per unit volumeincreases, a large amount of binder is required, and sphericity and spheroidization yield may be reduced. On the other hand, when the maximum particle size exceeds 50 µm, the expansion rate of the negative electrode active material during charging and discharging of the secondary battery increases significantly, and as charging and discharging are repeated, the bonding between the negative electrode active material particles and the binding between the negative electrode active material particles and the current collector deteriorates, which can significantly reduce the cycle characteristics.

In addition, the carbon-based negative electrode active material may have a form in which transition metal particles are uniformly dispersed. The transition metal particles refer to particles containing a transition metal, and the transition metal may be included in a form of a transition metal or a transition metal alloy, a transition metal oxide, a transition metal nitride, or a transition metal phosphate.

According to one embodiment, the transition metal particles include magnetizable transition metals such as, for example, iron (Fe) and nickel (Ni). These transition metal particles may be included in a process for manufacturing a carbon-based negative electrode active material. The present disclosure may further improve the charge/discharge performance of the carbon-based negative electrode active material under high-rate conditions and/or high-temperature conditions, by including the transition metal particles in the carbon-based negative electrode active material of the negative electrode. The transition metal particles may include iron and nickel in a predetermined concentration range, respectively, and the iron and nickel may have a predetermined concentration ratio. The concentration of the transition metal particles and/or the transition metal may be measured using, for example, an inductively-coupled plasma-optical emission spectrometer (ICP-OES).

For example, the iron may be included in the carbon-based negative electrode active material in a concentration of 0.1 ppm to 1,000 ppm. For example, the iron may be included in the carbon-based negative electrode active material in a concentration of 0.1 ppm to 900 ppm; 0.1 ppm to 800 ppm; 0.1 ppm to 750 ppm; 0.1 ppm to 500 ppm; 0.1 ppm to 250 ppm; 0.1 ppm to 100 ppm; 0.1 ppm to 50 ppm; 0.1 ppm to 10 ppm; 0.1 ppm to 5 ppm; 0.1 ppm to 1 ppm; 0.5 ppm to 4 ppm; 10 ppm to 990 ppm; 100 ppm to 990 ppm; 200 ppm to 990 ppm; 500 ppm to 990 ppm; 750 ppm to 990 ppm; 1.0 ppm to 4.9 ppm; 0.3 ppm to 1.8 ppm; or 0.1 ppm to 0.9 ppm.

In addition, the nickel may be included in the carbon-based negative electrode active material in a concentration of 0.01 ppm to 500 ppm. For example, the nickel may be included in a concentration of 0.01 ppm to 300 ppm; 0.01 ppm to 200 ppm; 0.01 ppm to 150 ppm; 0.01 ppm to 115 ppm; 0.01 ppm to 100 ppm; 0.01 ppm to 75 ppm; 0.01 ppm to 50 ppm; 0.01 ppm to 25 ppm; 0.01 ppm to 10 ppm; 0.01 ppm to 5 ppm 0.01 ppm to 3 ppm; 0.01 ppm to 1.5 ppm; 1 ppm to 3 ppm; 10 ppm to 200 ppm; 50 ppm to 200 ppm 80 ppm to 150 ppm 110 ppm to 190 ppm 0.10 ppm to 0.95 ppm; or 0.2 ppm to 1.1 ppm.

The carbon-based negative electrode active material may include total transition metal particles, including iron, nickel, and additional transition metals other than iron and nickel, at a concentration of 1,200 ppm or less. For example, the carbon-based negative electrode active material may include the transition metal particles therein at a concentration of 0.01 ppm to 1,200 ppm; 0.01 ppm to 1,100 ppm; 0.05 ppm to 1,050 ppm; 0.1 ppm to 990 ppm; 0.1 ppm to 500 ppm; 0.1 ppm to 100 ppm; 0.1 ppm to 50 ppm; 0.1 ppm to 10 ppm; 0.1 ppm to 5 ppm; 0.1 ppm to 1 ppm; 0.1 ppm to 1 ppm; 0.1 ppm to 5 ppm; 0.1 ppm to 1 ppm; 0.5 ppm to 4 ppm; 110 ppm to 1,000 ppm; 110 ppm to 800 ppm; 110 ppm to 600 ppm; 110 ppm to 400 ppm; 200 ppm to 650 ppm; 200 ppm to 990 ppm; 500 ppm to 990 ppm; 800 ppm to 990 ppm; 1.0 ppm to 4.9 ppm; 0.8 ppm to 2.3 ppm; or 0.1 ppm to 0.9 ppm.

According to one embodiment, the transition metal may be either atransition metal having magnetism (magnetic transition metal), or in some cases, a transition metal having no magnetism (non-magnetic transition metal). Alternatively, the transition metal may include both a magnetic transition metal and a non-magnetic transition metal. For example, the non-magnetic transition metal may be present in the form of an alloy with the magnetic transition metal, and thus, may be detected together with the magnetic transition metal during detection.

By controlling the concentration of the total transition metal particles including iron, nickel, and additionally included transition metals in a carbon-based negative electrode active material within the above range, the present disclosure may suppress or prevent the reduction in charge mobility from the positive electrode during charge/discharge of a secondary battery due to an excessive concentration exceeding the upper limit described above. For example, by controlling the concentration of the transition metal particles in the carbon-based negative electrode active material within the above range, side reactions with the electrolyte during charge/discharge of the secondary battery are suppressed, thereby suppressing or preventing the reduction in initial efficiency, and gas generation due to electrolyte decomposition is also suppressed, thereby enhancing the safety of the secondary battery. In addition, the reduction in the capacity of the negative electrode during high-rate charge and discharge, or fire or explosion occurring through various mechanisms of the secondary battery, may be suppressed or prevented.

According to one embodiment, the concentration ratio of iron and nickel (Fe/Ni) included in the carbon-based negative electrode active material may be in a range of 2.5 to 13.0. For example, the concentration ratio of iron and nickel (Fe/Ni) included in the carbon-based negative electrode active material may be in a range of 2.5 to 12.0; 2.5 to 10.0; 2.5 to 8.0; 2.5 to 5.5; 2.5 to 4.5; 2.5 to 4.1; 2.5 to 3.9; 3.25 to 9.5; 3.2 to 8.5; 3.2 to 6.5; 3.2 to 4.5; 3.2 to 3.9; 3.5 to 8.5; 4.0 to 5.5; 5.0 to 8.5; 6.0 to 13.0; 9.0 to 13.0; 2.8 to 12.5; or 3.2 to 7.9.

When the concentration ratio of iron and nickel contained in the carbon-based negative electrode active material is adjusted within the above range, the present disclosure may suppress or prevent an increase in the electrical resistance of the negative electrode during high-rate charge and discharge and a decrease in the lifespan during high-temperature charge and discharge.

The transition metal particles may additionally include transition metal elements in addition to iron and nickel. For example, the transition metal particles may further include one or more of cobalt, chromium, zinc, magnesium, manganese, and copper. The transition metals may be included in the particles in the form of a transition metal or an alloy, a transition metal oxide, a transition metal nitride, or a transition metal phosphate.

In this case, the transition metal particles having magnetism may include iron in an amount of 50% or more based on the total weight. For example, the transition metal particles may include iron in an amount of 50% to 95%; 50% to 90%; 55% to 90%; 60% to 90%; 65% to 90%; 75% to 90%; 80% to 90%; 55% to 85%; 55% to 80%; 60% to 80%; 60% to 70%; 70% to 85%; 58% to 69%; 62% to 81%; or 76% to 89%.

The present disclosure has an advantage in that the electrical conductivity of the negative electrode may be increased without causing a side reaction with the electrolyte impregnated in the negative electrode active layer during charge and discharge of the secondary battery, by ensuring that the ratio of iron included in the transition metal particles satisfies the above range.

Meanwhile, the negative electrode active layer according to the present disclosure may, optionally, further include a conductive material, a binder, and other additives along with the carbon-based negative electrode active material as the main component, as necessary.

The conductive material may include one or more of carbon black, acetylene black, Ketjen black, carbon nanotubes, and carbon fibers, but is not limited thereto.

As an example, the negative electrode active layer may include, as the conductive material, carbon black, carbon nanotubes, and carbon fibers, either alone or in combination.

At this time, the content of the conductive material may be 0.1 parts by weight to 10 parts by weight based on total 100 parts by weight of the negative electrode active layer. For example, the content of the conductive material may be 0.1 parts by weight to 8 parts by weight, 0.1 parts by weight to 5 parts by weight, 0.1 parts by weight to 3 parts by weight, 2 parts by weight to 6 parts by weight, or 0.5 parts by weight to 2 parts by weight based on total 100 parts by weight of the negative electrode active layer. By controlling the content of the conductive material to the range as described above, the present disclosure may suppress the resistance of the negative electrode from increasing due to a low content of the conductive material, thereby suppressing the charging capacity from being reduced, and may suppress the content of the negative electrode active material from decreasing due to an excessive amount of the conductive material, thereby suppressing the charging capacity from being reduced, or suppress the rapid charging characteristics from decreasing due to an increase in the loading amount of the negative electrode active layer.

The binder is a component that assists in the bonding of the negative electrode active material and the conductive material, and assist in the bonding to a current collector. The binder may be appropriately applied within a range that does not deteriorate the electrical properties of the electrode. The binder may include one or more of polyvinylidene fluoride-hexafluoropropylene copolymer (PVDF-co-HFP), polyvinylidene fluoride (PVdF), polyacrylonitrile, poly(methyl methacrylate), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluororubber.

The content of the binder may be 0.1 parts by weight to 10 parts by weight based on total 100 parts by weight of the negative electrode active layer. For example, the content of the binder may be 0.1 parts by weight to 8 parts by weight, 0.1 parts by weight to 5 parts by weight, 0.1 parts by weight to 3 parts by weight, or 2 parts by weight to 6 parts by weight based on total 100 parts by weight of the negative electrode active layer. By controlling the content of the binder included in the negative electrode active layer to the above range, the present disclosure may suppress the adhesion of the active layer from deteriorating due to a low content of the binder or suppress the electrical properties of the electrode from deteriorating due to an excessive amount of the binder.

In addition, the average thickness of the negative electrode active layer may be in a range of 50 µm to 500 µm. For example, the average thickness of the negative electrode active layer may be in a range of 100 µm to 400 µm; 200 µm to 350 µm; 50 µm to 180 µm; 80 µm to 150 µm; 100 µm to 250 µm; 100 µm to 250 µm; or 130 µm to 190 µm. By controlling the average thickness of the negative electrode active layer within the above range, the present disclosure may implement high adhesion between the negative electrode active layer and the negative electrode current collector, as well as high energy density of the negative electrode.

Further, the negative electrode current collector is not particularly limited as long as it has high conductivity without causing chemical changes in the battery. For example, copper, stainless steel, nickel, titanium, and calcined carbon may be used as the negative electrode current collector, and in the case of copper or stainless steel, a material surface-treated with carbon, nickel, titanium, or silver, may also be used. In addition, the average thickness of the negative electrode current collector may be appropriately applied from 1 µm to 500 µm in consideration of the conductivity and total thickness of the negative electrode to be manufactured.

With the configuration described above, the negative electrode according to the present disclosure has advantages of excellent life characteristics under high-temperature conditions and low electrical resistance under high-rate conditions. Accordingly, a lithium secondary battery including the negative electrode of the present disclosure may have excellent high-temperature life characteristics and high-rate charge/discharge performance.

### <Method of Manufacturing Negative Electrode>

According to one embodiment, the present disclosure provides a method of manufacturing a negative electrode for a secondary battery, including: applying a negative electrode slurry including a carbon-based negative electrode active material to at least one surface of a negative electrode current collector, followed by drying to form a negative electrode active layer. The carbon-based negative electrode active material includes transition metal particles, and the transition metal particles includes iron and nickel. The carbon-based negative electrode active material includes total transition metal particles including iron and nickel at a concentration of 1,200 ppm or less, and the concentration ratio of iron and nickel (Fe/Ni) included in the carbon-based negative electrode active material is 2.5 to 13.0.

The method of manufacturing a negative electrode according to the present disclosure refers to the method for manufacturing the above-described negative electrode of the present disclosure. The method for manufacturing the negative electrode may manufacture a negative electrode for a lithium secondary battery by applying a negative electrode slurry on a negative electrode current collector and drying the applied negative electrode slurry to form a negative electrode active layer.

The negative electrode slurry may include a carbon-based negative electrode active material as a main component, and the carbon-based negative electrode active material may have a form in which transition metal particles are uniformly dispersed. The transition metal particles refer to particles including either magnetic or non-magnetic transition metal, or both types of transition metals, and the transition metal may be included in the form of a transition metal or an alloy of two types of magnetic or non-magnetic transition metals, a transition metal oxide, a transition metal nitride, or a transition metal phosphate. The transition metal particles include iron (Fe) and nickel (Ni) as magnetizable transition metals.

The carbon-based negative electrode active material is prepared by (S1) graphitizing a carbon raw material; (S2) carbonizing the carbon raw material graphitized in (S1); and (S3) adjusting a concentration of transition metal particles having magnetism present in the carbon raw material by applying a magnetic field at least once before and after (S2).

According to one embodiment, the graphitizing step (S1) refers to a process of heat-treating a carbon raw material at a temperature of 2,500°C or higher to convert a disordered carbon raw material structure into a graphite structure ordered by van der Waals.

The "carbon raw material" may include at least one of needle cokes, mosaic cokes, coaltar pitch, and resin pitch.

The graphitizing step (S1) may be performed using a device such as an Acheson graphitization furnace, a box type graphitization furnace, or a lengthwise graphitization furnace.

The graphitizing step (S1) may be applied at any heat treatment temperature capable of inducing a physical change in the structure of the irregular carbon raw material into an ordered structure such as graphite, without being particularly limited. For example, the graphitizing step (S1) may be performed at a temperature in a range of 2,000°C to 3,500°C; 2,500°C to 3,500°C; 2,800°C to 3,500°C; or 2,800°C to 3,200°C.

The present disclosure may readily induce a change in the physical structure of a carbon raw material by performing the graphitizing step (S1) in the above temperature range. Accordingly, the product thus obtained has high crystallinity, and thus, has excellent electrical properties when applied to the negative electrode. In addition, since the sublimation phenomenon on the surface of the carbon raw material is suppressed during heat treatment, there is an advantage of excellent process efficiency.

The carbon raw material obtained in the graphitizing step (S1) may be a carbon raw material from which a portion of the carbon raw material present at the top of the graphitized carbon raw material has been removed. When the carbon raw material is graphitized, foreign substances such as transition metals and non-metals present inside the carbon raw material may be volatilized. However, in the case of certain transition metals, since the boiling point is equal to or slightly higher than the graphitization temperature, the transition metals may not be completely volatilized and may partially remain at the top of the graphitized carbon raw material. Accordingly, in step (S1), when the graphitized carbon raw material is taken out of the reactor, a predetermined carbon raw material located at the top may be removed and obtained. The carbon raw material to be removed may be a carbon raw material that has been introduced into the reactor and exists at a depth ratio of 10% or less; 5% or less; or 3% or less based on the total depth of the carbon raw material on the surface of the carbon raw material to the same depth.

Next, the step of carbonizing the graphitized carbon raw material (S2) refers to a process of assembling and compacting the graphitized carbon raw material. To this end, the present disclosure may perform carbonization in a state where the graphitized carbon raw material and pitch are mixed.

The carbon raw material graphitized by the graphitizing step (S1) may have a spherical secondary particle shape by assembling the primary particles in a form of flakes. When the graphitized carbon raw material is uniformly mixed with pitch and then carbonized, the mixed pitch fixes the carbon raw materials adsorbed on the surface of the carbon raw material, so that more stable spherical secondary particles may be obtained. In addition, since the density of the spherical secondary particles increases due to the pitch on the surface, high energy density of the negative electrode active layer may be implemented.

The "pitch" is mainly a material made of coal or petrochemical process byproducts, and may be a commonly used solid pitch or liquid pitch. The solid pitch may be obtained by crushing coal tar pitch, petroleum pitch, synthetic pitch, or wood tar pitch. The liquid pitch may be manufactured by dissolving liquid resin or solid pitch in a solvent, followed by coating and carbonizing. The solvent that may be used is hexane, toluene, tetrahydrofuran (THF), quinoline, N-methylpyrrolidone (NMP), or ethanol.

The solid pitch may have an average particle diameter (D₅₀) of 1 µm to 7 µm, or 2 µm to 4 µm. When the average particle diameter (D₅₀) of the solid pitch satisfies the range, the solid pitch may be uniformly distributed and mixed among the negative electrode active material particles. As a result, the surface of the negative electrode active material particles are more uniformly coated.

The pitch may be used in an amount of 1 part by weight to 10 parts by weight; or 3 parts by weight to 5 parts by weight, based on 100 parts by weight of the graphitized carbon raw material. By controlling the mixing amount of the pitch during carbonization of the graphitized carbon raw material within the above range, the present invention may suppress or prevent a significant increase in the content of transition metal particles contained in the carbon-based negative electrode active material manufactured due to a pitch content higher than the upper limit described above. In addition, the present disclosure may suppress or prevent a deterioration in structural stability due to lithium insertion/desorption of the carbon-based negative electrode active material during charge/discharge of a secondary battery due to a pitch mixing amount lower than the lower limit described above.

In addition, in step (S2), the graphitized carbon raw material and the pitch may be homogenized using a homogenizing device for uniform mixing of the graphitized carbon raw material and the pitch. The homogenizing device may be any homogenizing device commonly applied in the art, without being particularly limited. For example, the homogenizing device may be a mixing homogenizer (vertical/horizontal mixer) or an ultrasonic homogenizer.

The carbonizing step (S2) may be performed at a predetermined temperature range. For example, the carbonizing step (S2) may be performed at a temperature in a range of 1,000°C to 2,600°C; 1,500°C to 2,000°C; or 1,500°C to 1,600°C.

Meanwhile, the transition metal particles may be mixed into the carbon raw material by the wear of a grinding device during the process of grinding the carbon raw material before graphitizing the carbon raw material, and in some cases, may be mixed into the carbon raw material by wear of a homogenizing device during carbonization of the graphitized carbon raw material. In this way, the introduced transition metal particles may exhibit better electrical characteristics under high-temperature conditions, although it is difficult to control the concentration of the transition metal particles, compared to a case where the transition metal particles are intentionally mixed into the carbon raw material during the process of manufacturing a carbon-based negative electrode active material.

Accordingly, the method of manufacturing a negative electrode according to one embodiment of the present disclosure includes a step (S3) of adjusting the concentration of the transition metal particles in the carbon-based negative electrode active material by applying a magnetic field to the carbon raw material, before and/or after the step (S2) of carbonizing the graphitized carbon raw material, thereby removing the transition metal particles.

For example, the transition metal particles may be removed by applying a magnetic field to the carbon raw material before the carbonization of the graphitized carbon raw material (S2).

Also, the transition metal particles may be removed by applying a magnetic field to the carbon raw material after the carbonization of the graphitized carbon raw material (S2).

According to one embodiment, when the transition metal particles are magnetic metal particles, in this step (S3), the transition metal particles may be easily removed by applying a magnetic field to the carbon raw material. This makes it possible to adjust the concentration of the transition metal particles included in the carbon-based negative electrode active material to be manufactured. However, when a magnetic field is applied to the graphitized carbon raw material twice, the concentration of the transition metal particles remaining in the carbon raw material may be significantly reduced. In this case, since the concentration ratio of iron and nickel present in the carbon-based negative electrode active material is significantly reduced, the high-temperature charge/discharge performance may deteriorate or the electrical resistance of the negative electrode under high-rate conditions may increase. Thus, it is necessary to be appropriately adjusted.

The step (S3) of adjusting the concentration of the transition metal particles may be performed for a certain period of time with a magnetic field strength that satisfies a certain range using an electromagnet or a permanent magnet.

For example, the step (S3) may be performed by applying a magnetic field with a strength in the range of 1,000 G to 40,000 G (Gauss). According to one embodiment, the step (S3) may be performed by applying a magnetic field with a strength in a range of 5,000 G to 40,000 G; 20,000 G to 40,000 G; or 36,000 G to 40,000 G.

Further, the step (S3) may be performed for 1 second to 600 seconds, for example, 10 seconds to 600 seconds; 30 seconds to 600 seconds; 60 seconds to 600; 100 seconds to 500 seconds; 200 seconds to 400 seconds; or 250 seconds to 350 seconds.

By adjusting the magnetic field strength and the application time of the step (S3) of adjusting the concentration of transition metal particles to the above range, the present disclosure may more readily adjust the concentration of transition metal particles in the carbon-based negative electrode active material to be prepared.

The carbon-based negative electrode active material thus prepared includes transition metal particles, and the transition metal particles may include iron and nickel in a predetermined concentration range, and the iron and nickel may have a predetermined concentration ratio. The concentration of the transition metal particles and/or the transition metal may be measured using an inductively-coupled plasma-optical emission spectrometer (ICP-OES).

For example, the iron may be included in the carbon-based negative electrode active material in a concentration of 0.1 ppm to 1,000 ppm. For example, the iron may be included in the carbon-based negative electrode active material in a concentration of 0.1 ppm to 900 ppm; 0.1 ppm to 800 ppm; 0.1 ppm to 750 ppm; 0.1 ppm to 500 ppm; 0.1 ppm to 250 ppm; 0.1 ppm to 100 ppm; 0.1 ppm to 50 ppm; 0.1 ppm to 10 ppm; 0.1 ppm to 5 ppm; 0.1 ppm to 1 ppm; 0.5 ppm to 4 ppm; 10 ppm to 990 ppm; 100 ppm to 990 ppm; 200 ppm to 990 ppm; 500 ppm to 990 ppm; 750 ppm to 990 ppm; 1.0 ppm to 4.9 ppm; 0.3 ppm to 1.8 ppm; or 0.1 ppm to 0.9 ppm.

In addition, the nickel may be included in the carbon-based negative electrode active material in a concentration of 0.01 ppm to 500 ppm. For example, the nickel may be included in the carbon-based negative electrode active material in a concentration of 0.01 ppm to 300 ppm; 0.01 ppm to 200 ppm; 0.01 ppm to 150 ppm; 0.01 ppm to 115 ppm; 0.01 ppm to 100 ppm; 0.01 ppm to 75 ppm; 0.01 ppm to 50 ppm; 0.01 ppm to 25 ppm; 0.01 ppm to 10 ppm; 0.01 ppm to 5 ppm; 0.01 ppm to 3 ppm; 0.01 ppm to 1.5 ppm; 1 ppm to 3 ppm; 10 ppm to 200 ppm; 50 ppm to 200 ppm; 80 ppm to 150 ppm; 110 ppm to 190 ppm; 0.10 ppm to 0.95 ppm; or 0.2 ppm to 1.1 ppm.

Further, the transition metal particles may additionally include transition metal elements in addition to iron and nickel that are magnetic. For example, the additionally included transition metal particles may further include at least one of cobalt that is magnetic, and chromium, zinc, magnesium, manganese, and copper that are non-magnetic. The transition metals may be included in the particles in the form of a transition metal or an alloy of transition metals, a transition metal oxide, a transition metal nitride, or a transition metal phosphate. As described above, the non-magnetic transition metals exist in the form of an alloy with the magnetic transition metals, and thus, may be detected together with the magnetic transition metals, for example, during capture for measurement.

Meanwhile, the application of the negative electrode slurry may be performed by discharging and coating the negative electrode slurry containing a carbon-based negative electrode active material onto the surface of the moving negative electrode current collector. The process may be applied in any manner conventionally practiced in the art without limitation, but may utilizes a die coating method. The die coating method may be performed through a slot die having a shim for controlling the discharging conditions of the negative electrode slurry. In this case, by controlling the shape and position of the shim, the loading amount and application thickness of the negative electrode slurry applied on the negative electrode current collector may be easily controlled.

In addition, the negative electrode slurry includes a carbon-based negative electrode active material as a main component, and may optionally further include a conductive material, a binder, and other additives, as necessary. At this time, since the composition of the negative electrode slurry has the same composition as the negative electrode active layer formed therefrom, further description is omitted.

In addition, the drying of the negative electrode slurry may be applied in any manner conventionally practiced in the art for drying electrode active layers, without limitation. For example, the drying may be performed by applying heat energy to the negative electrode slurry using a hot air dryer, a vacuum oven, or the like.

In addition, the manufacturing method according to the present disclosure may further include a step of rolling the negative electrode active layer formed by drying the negative electrode slurry. The rolling step is a step of increasing the energy density of the negative electrode active layer by applying pressure to the surface of the negative electrode active layer formed using a roll press or the like. At this time, the rolling may be performed under temperature conditions higher than room temperature.

For example, the rolling may be performed at a temperature in a range of 50°C to 100°C, for example, 60°C to 100°C; 75°C to 100°C; 85°C to 100°C; 50°C to 90°C; 60°C to 80°C; or 65°C to 90°C.

The rolling may be performed at a rolling speed in a range of 2 m/s to 7 m/s, for example, 2 m/s to 6.5 m/s; 2 m/s to 6 m/s; 2 m/s to 5.5 m/s; 2 m/s to 5 m/s; 2 m/s to 4.5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s or 6 m/s to 7 m/s.

The rolling may be performed under pressure conditions in a range of 50 MPa to 200 MPa, for example, it may be performed under pressure conditions in the range of 50 MPa to 150 MPa; 50 MPa to 100 MPa; 100 MPa to 200 MPa; 150 MPa to 200 MPa or 80 MPa to 140 MPa.

By performing the rolling under the temperature, speed, and/or pressure conditions as described above, the present disclosure is capable of readily increasing the energy density of the negative electrode without damage to the negative electrode active layer.

With the above-described configuration of the method for manufacturing a negative electrode according to the present disclosure, transition metal particles including iron and nickel in a predetermined concentration and concentration ratio, may be included in the carbon-based negative electrode active material. Accordingly, the manufactured negative electrode has advantages of excellent life characteristics under high-temperature conditions and low electrical resistance under high-rate conditions.

Hereinafter, the present disclosure will be described in more detail by examples and comparative examples.

However, the following examples and comparative examples are only illustrative of the present disclosure, and the content of the present disclosure is not limited to the following examples and comparative examples.

### <Manufacture of Negative Electrode>

### 1) Preparation of carbon-based negative electrode active material

As a carbon raw material, coke raw material was prepared. The prepared coke raw material was pulverized using a jet mill until the average particle size (D₅₀) became 10 µm. The pulverized coke raw material was granulated using a horizontal granulator at 800°C for 24 hours.

The granulated coke raw material graphitized by heat treatment at 2,800°C for 400 hours using an Acheson graphitization apparatus. When the graphitized product was taken out of the graphitization apparatus, the upper product from the product surface to a depth having a ratio of 3% based on the total depth of the product was removed, and the remaining product was obtained. The top product removal is indicated in Table 1 below.

By mixing 100 parts by weight of the graphitized product and 5 parts by weight of the solid phase pitch in a vertical/horizontal mixer, and carbonizing the mixture for 24 hours at a temperature condition of 1,500°C, an artificial graphite having a spherical secondary particle shape was prepared through assembly of flake-like primary particles. However, before and/or after the carbonization, a magnetic field of 30,000 G to 32,000 G was applied to the graphitized product using an electromagnet for 10 to 300 seconds, thereby adjusting the concentration of the transition metal particles present in the product. The timing of the concentration adjustment is indicated in Table 1 below.

The prepared artificial graphite was subjected to inductively-coupled plasma optical emission spectrometry (ICP-OES) analysis. For example, 100 g of each prepared artificial graphite was added to 200 mL of ethanol, and a Teflon magnet (magnetic field strength: approximately 5,000 G±100 G) was introduced into the ethanol to which the artificial graphite was added, and mixed for 2 hours. After mixing was completed, the Teflon magnet was removed from the ethanol, placed in a Teflon vial, injected with 15 mL of aqua regia, and then heated at 150°C for 3 hours. The heated aqua regia was cooled to room temperature, and ultrapure water was filled into the cooled aqua regia to a total volume of 50 mL to prepare a sample material. Calibration curves for reference solutions of 0.1 mg/kg, 0.5 mg/kg, and 1.0 mg/kg were prepared using an inductively-coupled plasma emission spectrometer (Model: OPTIMA AVIO 500, Manufacturer: PERKIN-ELMER), and analysis was performed on the prepared sample materials. At this time, the method detection limit (MDL) was set to less than 50 µg/kg(< 50 µg/kg).

As a result, it was confirmed that the artificial graphite had particles containing iron (Fe), nickel (Ni), cobalt (Co), chromium (Cr), zinc (Zn), magnesium (Mg), manganese (Mn), and copper (Cu) uniformly dispersed therein. At this time, (1) the total concentration of transition metals included in the artificial graphite, (2) the respective concentrations of iron (Fe) and nickel (Ni), and (3) the concentration ratio of iron and nickel are indicated in Table 1 below.

**[Table 1]**

| | Removal of top of graphitized product | Application of magnetic field | | Analysis result of transition metal particle component [ppm] | | | |
|---|---|---|---|---|---|---|---|
| | | Application timing | Application time | Total conc. | Fe conc. | Ni conc. | Fe/Ni |
| Preparation Example 1 | O | Before carbonization | 300sec | 1 | 0.6 | 0.2 | 3 |
| Preparation Example 2 | O | After carbonization | 300sec | 2 | 1.3 | 0.4 | 3.25 |
| Preparation Example 3 | O | After carbonization | 150sec | 5 | 3.9 | 0.9 | 4.33 |
| Preparation Example 4 | O | After carbonization | 80sec | 16 | 12.9 | 2.9 | 4.44 |
| Preparation Example 5 | O | After carbonization | 15sec | 91 | 76 | 7.1 | 10.70 |
| Preparation Example 6 | X | After carbonization | 10sec | 160 | 95 | 30 | 3.17 |
| Preparation Example 7 | X | After carbonization | 300sec | 1,000 | 860 | 110 | 7.82 |
| Preparation Example 8 | X | After carbonization | 200sec | 1,000 | 830 | 74 | 11.22 |
| Preparation Example 9 | O | Before & after carbonization | 300sec | 0.1 | 0.07 | 0.03 | 2.33 |
| Preparation Example 10 | X | Before & after carbonization | 300sec | 500 | 405 | 29 | 13.97 |
| Preparation Example 11 | X | Before carbonization | 300sec | 2,000 | 1,790 | 190 | 9.42 |
| Preparation Example 12 | O | X | - | 4,000 | 3,480 | 370 | 9.41 |
| Preparation Example 13 | X | X | - | 6,000 | 5,270 | 560 | 9.41 |

### 2) Manufacture of negative electrode

Carboxymethyl cellulose (CMC) and styrene butadiene rubber (SBR) were prepared as binders. Then, 96 parts by weight of the artificial graphite manufactured in Preparation Examples 1 to 10, 1.5 parts by weight of carboxymethyl cellulose (CMC), and 2.5 parts by weight of styrene butadiene rubber (SBR) were mixed with water to a solid content of 50% to prepare a negative electrode slurry.

The prepared negative electrode slurry was applied onto a copper foil (thickness: 10 µm) being transported roll-to-roll (transport speed: 5 m/min) using a die coater.

The applied negative electrode slurry was dried with hot air to form a negative electrode active layer on the negative electrode current collector. The formed negative electrode active layer was rolled at 50±1°C, a pressure of 100 to 150 MPa, and a conveying speed of 3 m/s to manufacture a negative electrode for a lithium secondary battery (average thickness of the negative electrode active layer: 160±5 µm). The types of artificial graphite applied to each negative electrode are indicated in Table 2 below.

**[Table 2]**

| | Types of artificial graphite applied |
|---|---|
| Example 1 | Artificial graphite prepared in Preparation Example 1 |
| Example 2 | Artificial graphite prepared in Preparation Example 2 |
| Example 3 | Artificial graphite prepared in Preparation Example 3 |
| Example 4 | Artificial graphite prepared in Preparation Example 4 |
| Example 5 | Artificial graphite prepared in Preparation Example 5 |
| Example 6 | Artificial graphite prepared in Preparation Example 6 |
| Example 7 | Artificial graphite prepared in Preparation Example 7 |
| Example 8 | Artificial graphite prepared in Preparation Example 8 |
| Comparative Example 1 | Artificial graphite prepared in Preparation Example 9 |
| Comparative Example 2 | Artificial graphite prepared in Preparation Example 10 |
| Comparative Example 3 | Artificial graphite prepared in Preparation Example 11 |
| Comparative Example 4 | Artificial graphite prepared in Preparation Example 12 |
| Comparative Example 5 | Artificial graphite prepared in Preparation Example 13 |

### <Manufacture of lithium secondary battery>

As a positive electrode active material, LiNi_{0.7}Co_{0.1}Mn_{0.1}Al_{0.1}O₂ with a particle size of 5 µm was prepared, and was mixed with a carbon-based conductive agent and binder, polyvinylidene fluoride in N-methyl pyrrolidone (NMP) at a weight ratio of 94:3:3 to form a slurry, which was cast on an aluminum sheet, dried in a vacuum oven at 120°C, and then rolled to manufacture a negative electrode.

A separator made of 18 µm polypropylene was interposed between the positive electrode obtained above and the negative electrode manufactured in Examples 1 to 8 and Comparative Examples 1 to 5, respectively, and inserted into a case, and then an electrolyte composition was injected to assemble a mono-cell for a lithium secondary battery.

The types of negative electrodes applied to each lithium secondary battery are indicated in Table 3 below.

**[Table 3]**

| | Types of negative electrode applied |
|---|---|
| Example 9 | Negative electrode manufactured in Example 1 |
| Example 10 | Negative electrode manufactured in Example 2 |
| Example 11 | Negative electrode manufactured in Example 3 |
| Example 12 | Negative electrode manufactured in Example 4 |
| Example 13 | Negative electrode manufactured in Example 5 |
| Example 14 | Negative electrode manufactured in Example 6 |
| Example 15 | Negative electrode manufactured in Example 7 |
| Example 16 | Negative electrode manufactured in Example 8 |
| Comparative Example 6 | Negative electrode manufactured in Comparative Example 1 |
| Comparative Example 7 | Negative electrode manufactured in Comparative Example 2 |
| Comparative Example 8 | Negative electrode manufactured in Comparative Example 3 |
| Comparative Example 9 | Negative electrode manufactured in Comparative Example 4 |
| Comparative Example 10 | Negative electrode manufactured in Comparative Example 5 |

### <Experimental Example>

In order to evaluate the performance of the negative electrode according to the present disclosure, the following experiments were performed on the negative electrodes and lithium secondary batteries manufactured in the examples and comparative examples.

### 1) Evaluation of high-rate DC resistance of secondary batteries

The mono-cells manufactured in Examples 9 to 16 and Comparative Examples 6 to 10 were charged at 0.1 C in constant current-constant voltage (CC-CV) mode at 25°C to 4.25 V, and then discharged to 3.0 V at a constant current of 0.1 C to activate the mono-cells.

Each activated mono-cell was charged at 25°C with a constant current of 2.5C for 30 seconds to a state of charge (SOC) of 50%, and the direct current internal resistance (DCIR) was measured. The measured results are indicated in Table 4 below.

### 2) High-temperature life evaluation

The mono-cells manufactured in Examples 9 to 16 and Comparative Examples 6 to 10 were charged at 0.1 C in constant current-constant voltage (CC-CV) mode at 25°C to 4.25 V, and then discharged to 3.0 V at a constant current of 0.1 C to activate the mono-cells.

After the mono-cells are activated, constant current (CC) charging at 1C and constant current (CC) discharging at 1C at 45 °C were set as 1 cycle, and 300 cycles of charge and discharge were performed on each mono-cell. The charge capacity of the 1st cycle and the charge capacity of the 300th cycle were then measured during the charge and discharge of each mono-cell. The high-temperature life of each mono-cell was evaluated by calculating the charge capacity retention rate of the 300th cycle based on the measured charge capacity of the 1st cycle. The results are indicated in Table 4 below.

**[Table 4]**

| | Kind of negative electrode | DC resistance [mΩ] | Capacity retention rate at 300 cycles [%] |
|---|---|---|---|
| Example 9 | Negative electrode manufactured in Example 1 | 1783 | 84.6 |
| Example 10 | Negative electrode manufactured in Example 2 | 1780 | 85.5 |
| Example 11 | Negative electrode manufactured in Example 3 | 1760 | 86.9 |
| Example 12 | Negative electrode manufactured in Example 4 | 1754 | 86.5 |
| Example 13 | Negative electrode manufactured in Example 5 | 1772 | 84.8 |
| Example 14 | Negative electrode manufactured in Example 6 | 1825 | 79.8 |
| Example 15 | Negative electrode manufactured in Example 7 | 1790 | 84.0 |
| Example 16 | Negative electrode manufactured in Example 8 | 1805 | 82.9 |
| Comparative Example 6 | Negative electrode manufactured in Comparative Example 1 | 1831 | 82.6 |
| Comparative Example 7 | Negative electrode manufactured in Comparative Example 2 | 1951 | 77.7 |
| Comparative Example 8 | Negative electrode manufactured in Comparative Example 3 | 1913 | 79.9 |
| Comparative Example 9 | Negative electrode manufactured in Comparative Example 4 | 1921 | 79.1 |
| Comparative Example 10 | Negative electrode manufactured in Comparative Example 5 | 1946 | 78.6 |

As indicated in Table 4 above, it can be seen that the negative electrode for a lithium secondary battery according to the present disclosure has low DC resistance during high-rate charge and discharge and excellent high-temperature charge and discharge performance.

For example, the secondary battery of the example in which the concentration and concentration ratio of iron and nickel included in the carbon-based negative electrode active material satisfy a predetermined range had a low DC resistance of less than 1810 mΩ during high-rate charge/discharge of 2.5C, and a high capacity retention rate of 83% or more during high-temperature charge/discharge.

Meanwhile, the secondary battery of Comparative Example 6 had a significantly lower concentration of transition metal particles in the carbon-based negative electrode material compared to Examples, but the concentration ratio of iron and nickel was significantly lower, so that the DC resistance exceeded 1800 mΩ during high-rate charge and discharge and the capacity retention rate was less than 83% during high-temperature charge/discharge.

This means that even though a carbon-based negative electrode active material includes a certain amount of transition metal particles, when the concentrations of iron and nickel and their concentration ratios satisfy a certain range, the DC resistance of the negative electrode during high-rate charge and discharge and the capacity retention rate during high-temperature charge and discharge may be improved.

From the results, it can be seen that the negative electrode for a lithium secondary battery according to the present disclosure has advantages of excellent life characteristics under high-temperature conditions and low electrical resistance under high-rate conditions.

From the foregoing, it will be appreciated that various embodiments of the present disclosure have been described herein for purposes of illustration, and that various modifications may be made without departing from the scope and spirit of the present disclosure.

Therefore, the technical scope of the present invention should not be limited to the contents described in the detailed description of the specification, but should be defined by the scope of the patent claims.

## Claims

1. A negative electrode for a secondary battery, the negative electrode comprising:
a negative electrode current collector; and
a negative electrode active layer provided on at least one surface of the negative electrode current collector and including a carbon-based negative electrode active material,
wherein the carbon-based negative electrode active material includes transition metal particles having magnetism,
the transition metal particles includes iron and nickel,
the carbon-based negative electrode active material includes the transition metal particles at a concentration of 1,200 ppm or less, and
the Fe/Ni concentration ratio of iron and nickel included in the carbon-based negative electrode active material is 2.5 to 13.0.

2. The negative electrode for a secondary battery according to claim 1, wherein a concentration of iron included in the carbon-based negative electrode active material is 0.1 ppm to 1,000 ppm.

3. The negative electrode for a secondary battery according to claim 1, wherein a concentration of nickel included in the carbon-based negative electrode active material is 0.01 ppm to 500 ppm.

4. The negative electrode for a secondary battery according to claim 1, wherein the carbon-based negative electrode active material includes the transition metal particles at a concentration of 0.01 ppm to 1,100 ppm.

5. The negative electrode for a secondary battery according to claim 1, wherein the transition metal particles having magnetism include 50% or more of iron based on the total weight.

6. The negative electrode for a secondary battery according to claim 1, wherein the transition metal particles having magnetism included in the carbon-based negative electrode active material further include at least one of cobalt, chromium, zinc, magnesium, manganese, and copper.

7. The negative electrode for a secondary battery according to claim 1, wherein the carbon-based negative electrode active material is an artificial graphite in a form of secondary particles assembled from primary particles.

8. A method of manufacturing a negative electrode for a secondary battery, the method comprising:
applying a negative electrode slurry including a carbon-based negative electrode active material to at least one surface of a negative electrode current collector, followed by drying the negative electrode slurry applied to the negative electrode current collector to form a negative electrode active layer,
wherein the carbon-based negative electrode active material includes transition metal particles having magnetism,
the transition metal particles includes iron and nickel,
the carbon-based negative electrode active material includes the transition metal particles at a concentration of 1,200 ppm or less, and
a Fe/Ni concentration ratio of iron and nickel included in the carbon-based negative electrode active material is 2.5 to 13.0.

9. The method according to claim 8, wherein the carbon-based negative electrode active material is prepared by
(S1) graphitizing a carbon raw material;
(S2) carbonizing the carbon raw material graphitized in (S1); and
(S3) adjusting a concentration of transition metal particles having magnetism present in the carbon raw material by applying a magnetic field to the carbon raw material at least once before and after (S2).

10. The method according to claim 9, wherein, in (S3), the magnetic field is applied with a strength of 1,000 G to 40,000 G for 1 to 600 seconds.

11. The method according to claim 9, wherein (S3) is performed before or after (S2).

12. The method according to claim 8, wherein a concentration of iron included in the carbon-based negative electrode active material is 0.1 ppm to 1,000 ppm.

13. The method according to claim 8, wherein a concentration of nickel included in the carbon-based negative electrode active material is 0.01 ppm to 500 ppm.

14. The method according to claim 8, wherein the transition metal particles included in the carbon-based negative electrode active material further include at least one of cobalt, chromium, zinc, magnesium, manganese, and copper.
